# FASCICULE DE BREVET EUROPEEN

(11) **EP 2 143 645 B1**
(45) Date de publication et mention de la délivrance du brevet: **05.09.2012**
(21) Numéro de dépôt: 09405107.5
(22) Date de dépôt: 02.07.2009
(51) Int. Cl.: B65B 35/48, B65G 51/03

(54) **Procédé et dispositif pour alimenter une machine de conditionnement de produits alimentaires en portions individuelles**
Verfahren und Vorrichtung für die Zuführung an eine Maschine zur Verpackung von Lebensmitteln von Einzelportionen
Method and device for supplying a machine for packaging food products with individual portions

(30) Priorité: 07.07.2008 CH 10512008
(43) Date de publication de la demande: 13.01.2010
(73) Titulaire: Robert Bosch GmbH, 70442 Stuttgart (DE)
(72) Inventeur: Cermeno, César-Carlos, 1022 Chavannes-pres-Renens (CH)
(74) Mandataire: Nithardt, Roland

(56) Documents cités:
- EP-A- 0 043 457
- CH-A- 325 712
- CH-A- 482 604
- DE-A1- 4 039 313
- US-A- 2 805 898

## Description

### Domaine technique

La présente invention concerne un procédé pour alimenter une unité de conditionnement de produits alimentaires en portions individuelles, et en particulier de blocs de bouillons pressés réalisés avec un mélange inhomogène de composants agglomérés, dans lequel l'on sort les produits d'une presse de mise en forme sur au moins une piste de fabrication, l'on transporte chaque produit en continu sur au moins une bande de convoyage et l'on procède à une mise au pas desdits produits pendant leur cheminement vers ladite unité de conditionnement.

Elle concerne également un dispositif pour alimenter une unité de conditionnement de produits alimentaires en portions individuelles, et en particulier de blocs de bouillons pressés réalisés avec un mélange inhomogène de composants agglomérés, pour la mise en oeuvre de ce procédé, dans lequel l'on sort les produits d'une presse de mise en forme sur au moins une piste de fabrication, l'on transporte chaque produit en continu sur au moins une bande de convoyage et l'on procède à une mise au pas desdits produits pendant leur cheminement vers ladite unité de conditionnement.

### Technique antérieure

Certains produits alimentaires, tels que par exemple des chocolats ou d'autres produits tels que les bouillons réalisés au moyen de composants agglomérés dans une presse et sortant de cette presse sous la forme de blocs individuels, cubiques ou parallélépipédiques, doivent être acheminés vers une unité de conditionnement qui les emballe dans un matériau d'emballage étanche pour assurer leur protection et leur conservation. Ces blocs de produits sont fragiles, friables et ne supportent aucune contrainte de pression et de frottement. Ils doivent par conséquent être manipulés avec beaucoup de précautions. En outre, ces produits doivent être fabriqués en très grande quantité et, de ce fait, à très haute cadence, de sorte que leur acheminement vers une unité de conditionnement s'effectue à vitesse élevée. Il est donc nécessaire d'appliquer des solutions de transfert rapides et respectueuses de la qualité et de l'aspect esthétique des produits.

Un tel dispositif est décrit par la publication britannique GB 2 239 227 A, qui illustre un procédé et un équipement d'acheminement de chocolats vers une unité de conditionnement. Des moyens d'accélération pneumatiques des produits sur une bande transporteuse comportent des conduits latéraux incurvés qui injectent de l'air sous pression en vue de pousser les produits pour les accélérer. Par ailleurs, une sorte de coussin d'air est prévu pour réduire la friction entre les produits et la surface de la bande transporteuse.

Sur des machines de production de bouillons notamment, pour que les cadences élevées qui sont exigées puissent être atteintes, les produits sont de préférence fabriqués sur des presses à deux pistes de production. Si chaque piste de production était associée à une unité de conditionnement indépendante, le coût du conditionnement deviendrait exagéré par rapport au prix du produit. En revanche, on sait qu'une machine de conditionnement unique est capable d'absorber la production d'une presse à deux pistes. Cependant, une telle démarche consistant à amener à l'entrée unique d'une machine de conditionnement la production issue d'une presse à deux pistes implique le regroupement des produits sur un convoyeur unique et la mise au pas de ces produits sur ce convoyeur. Etant donné que les produits sont fragiles et ne supportent pas une manipulation brutale, le problème technique posé ne peut pas être résolu avec les dispositifs connus. En raison de la friabilité des produits, leur préhension au moyen de doigts ou de pinces appliquant une pression sur leurs faces ainsi que les accélérations élevées lors du passage d'une bande de convoyage sur une autre sont proscrites.

Tous les dispositifs connus qui s'appliquent à des produits alimentaires moins délicats opèrent avec des poussoirs, des doigts de préhension ou comportent des tronçons de bandes de convoyage qui accélèrent les produits lors du passage d'une bande à la suivante, par exemple pour assurer la séparation des produits en amont de l'unité de conditionnement ou pour assurer la mise au pas de ces produits en vue de leur conditionnement. Ces moyens ne peuvent pas être appliqués à des produits délicats et fragiles avec des cadences supérieures à 600 produits par minute par piste et il est nécessaire de trouver des solutior.s plus appropriées.

### Exposé de l'invention

La présente invention se propose de pallier ces inconvénients en offrant un procédé et un dispositif qui permettent d'alimenter une machine de conditionnement de produits alimentaires en portions individuelles à des cadences très élevées tout en préservant l'aspect esthétique du produit, en garantissant sa qualité et en évitant un encrassement des convoyeurs.

Ce but est atteint par le procédé selon l'invention tel que défini en préambule et **caractérisé en ce qu**'il comporte, avant ladite mise au pas finale des produits, une phase de prépositionnement desdits produits dans laquelle on utilise pour le prépositionnement, en combinaison, un flux de gaz laminaire inférieur formant un coussin d'air pour sustenter les produits, au moins deux flux de gaz laminaires latéraux agissant sur les côtés de ces produits pour les guider, et un flux de gaz laminaire supérieur à effet Coanda pour les accélérer.

Dans un mode de réalisation préféré du procédé, l'on prépositionne chaque produit en agissant sur le débit dudit flux de gaz laminaire supérieur en vue d'accélérer sélectivement lesdits produits.

L'on peut avantageusement générer lesdits flux laminaires respectivement inférieur et latéraux selon un angle aigu par rapport à la direction de cheminement du produit.

Ledit angle aigu est avantageusement sensiblement compris entre 5° et 25°, et de préférence voisin de 15°.

D'une manière avantageuse, l'on peut effectuer la mise au pas finale des produits, après leur prépositionnement, en les transportant sur un élément de support associé à un ruban à taquets dont les taquets prennent appui sur la face arrière desdits produits.

Ce but est également atteint par le dispositif selon l'invention tel que défini en préambule et **caractérisé en ce que** ledit dispositif comporte des moyens de prépositionnement sous la forme d'un dispositif pneumatique spécifique agencé pour prépositionner les produits avant leur mise au pas, ledit dispositif pneumatique étant agencé pour générer, en combinaison, un flux de gaz laminaire inférieur formant un coussin d'air pour sustenter lesdits produits, au moins deux flux de gaz laminaires latéraux agissant sur les côtés de ces produits pour les guider, et un flux de gaz laminaire supérieur à effet Coanda pour les accélérer.

Selon un mode de réalisation préféré, ledit dispositif pneumatique comporte au moins un canal d'accélération comportant un support de base pourvu d'au moins une glissière équipée d'au moins une entaille oblongue qui communique avec une arrivée d'air en vue de générer le flux de gaz laminaire inférieur sustentant lesdits produits dans ledit canal d'accélération.

Ledit canal d'accélération comporte avantageusement deux bordures latérales disposées de part et d'autre dudit support de base, lesdites bordures latérales étant pourvues chacune d'au moins une entaille longitudinale qui communique avec une arrivée d'air en vue de générer les deux flux de gaz laminaires latéraux guidant lesdits produits dans ledit canal d'accélération.

Ledit canal d'accélération comporte également un bloc central qui comprend une cavité centrale communiquant avec une arrivée d'air, ladite cavité centrale débouchant le long de la face d'entrée du bloc central avec un angle cassé pour générer le flux d'air laminaire supérieur à effet Coanda arrivant sur la face supérieure des produits et accélérant lesdits produits dans ledit canal d'accélération.

De préférence, les entailles de la glissière du support de base du canal d'accélération et les entailles des bordures latérales dudit canal forment des angles très aigus, de l'ordre de 5° à 25° et de préférence de l'ordre de 15° par rapport à la direction de cheminement des produits.

Dans le mode de réalisation préféré, les moyens agencés pour procéder à la mise au pas finale des produits après leur prépositionnement comportent un élément de support associé à un ruban à taquets dont les taquets prennent appui sur la face arrière desdits produits.

### Description sommaire des dessins

La présente invention et ses avantages seront mieux compris à la lecture de la description détaillée de mises en oeuvre préférées du dispositif de l'invention, en référence aux dessins annexés, donnés à titre indicatif et non limitatif, dans lesquels:
la figure 1 est une vue schématique illustrant une première forme de mise en oeuvre du procédé de l'invention sur un dispositif pour alimenter une unité de conditionnement de produits alimentaires en portions individuelles travaillant avec une piste d'entrée des produits et une piste de sortie,
la figure 2 est une vue schématique illustrant une seconde forme de mise en oeuvre du procédé de l'invention sur un dispositif pour alimenter une unité de conditionnement de produits alimentaires en portions individuelles travaillant avec deux pistes d'entrée des produits et une piste de sortie,
la figure 3 est une vue en perspective des moyens de prépositionnement des produits du dispositif selon l'invention,
la figure 4 est une vue frontale des moyens de prépositionnement de la figure 3,
La figure 5 est une vue en perspective d'une première partie des moyens de prépositionnement de la figure 3,
la figure 6 est une vue en perspective agrandie d'une deuxième partie des moyens de prépositionnement de la figure 3,
la figure 7 est une vue partielle en coupe d'une troisième partie des moyens de prépositionnement de la figure 3, et
la figure 8 est une vue partielle en perspective représentant la phase de mise au pas des produits.

### Meilleures manières de réaliser l'invention

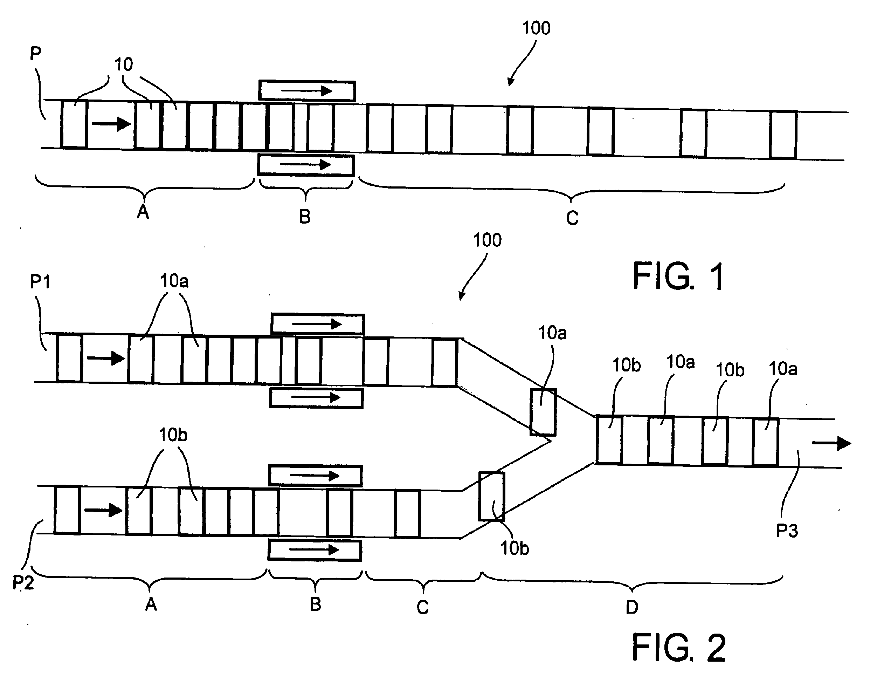

Le procédé de l'invention, selon une première forme de mise en oeuvre, est illustré schématiquement par la figure 1 et consiste à réceptionner des produits 10 à la sortie d'une presse (non représentée). Dans le cas illustré, les produits sont des blocs de bouillon qui sont issus d'une seule piste de fabrication P, à des cadences très élevées, par exemple à raison de 1'600 pièces par minute. Les produits 10 sont amenés sensiblement juxtaposés dans une zone A, dite de régulation du flux de circulation des produits d'un dispositif 100 pour alimenter une unité de conditionnement de produits alimentaires en portions individuelles. Ensuite, les produits 10 sont prépositionnés dans une zone B, dite de séparation et d'accélération, en vue de leur mise au pas ultérieure dans une zone C. La séparation des produits 10, dans la zone B de séparation et d'accélération est effectuée au moyen de flux de gaz laminaires, avec de l'air injecté comme cela sera décrit plus en détail par la suite. La combinaison de différents effets pneumatiques assure un prépositionnement des produits qui sont presque au pas à la sortie de la zone B et peuvent être repris par un dispositif de mise au pas mécanique dans la zone C.

Le procédé de l'invention, selon une seconde forme de mise en oeuvre, est illustré schématiquement par la figure 2 et consiste à réceptionner des produits 10a et 10b à la sortie d'une presse (non représentée), ces produits étant, dans le cas illustré, issus de deux pistes de fabrication P1 et P2 du dispositif 100 pour alimenter une unité de conditionnement de produits alimentaires en portions individuelles, par exemple à raison de deux fois 800 pièces par minute sur chaque piste, de sorte que la productivité exigée de 1600 produits, mentionnée précédemment, est également respectée. Les produits 10a et 10b sont, comme précédemment, initialement positionnés sur chacune des deux pistes P1 et P2, dans une zone A, dite de régulation du flux de circulation des produits. Ensuite, les produits 10 sont prépositionnés dans une zone B, dite de séparation et d'accélération, en vue de leur mise au pas ultérieure dans une zone C. Ce prépositionnement est effectué au moyen de flux de gaz laminaires obtenus par injection d'air. Le prépositionnement respectif des produits 10a et 10b et leur mise au pas sont conçus de telle manière que les produits de l'une des pistes de fabrication, par exemple P1, puissent s'intercaler entre les produits de l'autre piste de fabrication P2 dans une zone D et se placer sur une piste de sortie P3 unique qui réceptionne l'ensemble des produits 10a et 10b regroupés. En fait les produits des pistes P1 et P2 sont disposés en quinconce.

Dans la zone A on effectue une mise au pas préalable sur une bande de convoyage contrôlée par un servomoteur et pourvue de perforations pour aspiration à vide afin d'éviter tout glissement des produits sur ladite bande. Cette phase de convoyage est suivie d'une phase de prépositionnement qui se situe dans la zone B, qui sera décrite plus en détail ci-après.

L'objet de l'invention concerne plus précisément cette zone B du dispositif 100 pour alimenter une unité de conditionnement de produits alimentaires en portions individuelles, qui concerne le positionnement des produits et qui est une phase extrêmement délicate en raison de la fragilité des produits concernés et des cadences élevées. On a constaté que pour leur accélération les produits ne toléraient aucune poussée mécanique, par exemple au moyen de palettes ou de poussoirs prenant appui sur une de leur face. On a également constaté que le glissement des produits sur les bandes de convoyage provoquait un encrassement de ces dernières. Enfin, même une accélération pneumatique par jets d'air sur la face arrière des produits risquait de casser les angles en provoquant des dépôts de salissures et la dégradation de l'aspect physique des produits. De ce fait, les moyens classiques connus se sont révélés inutilisables.

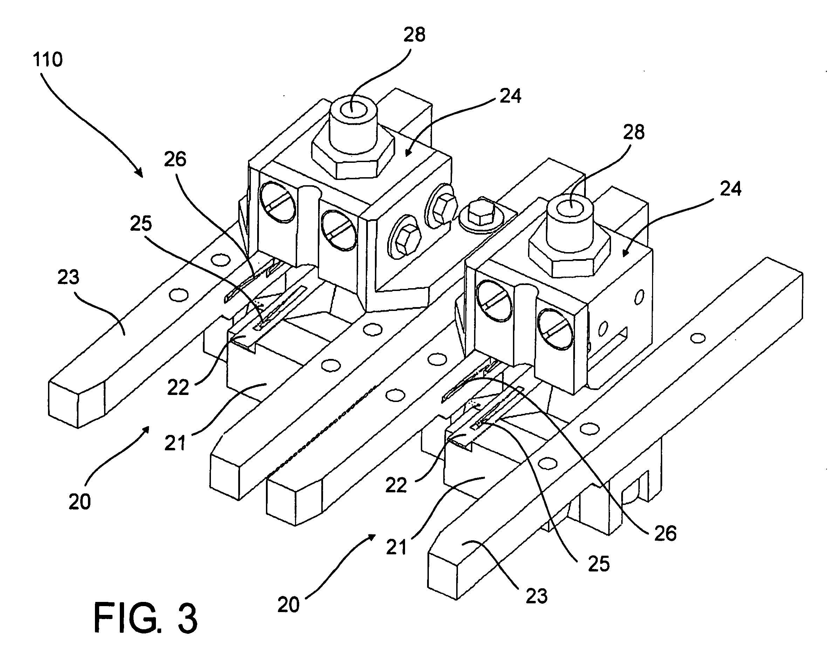

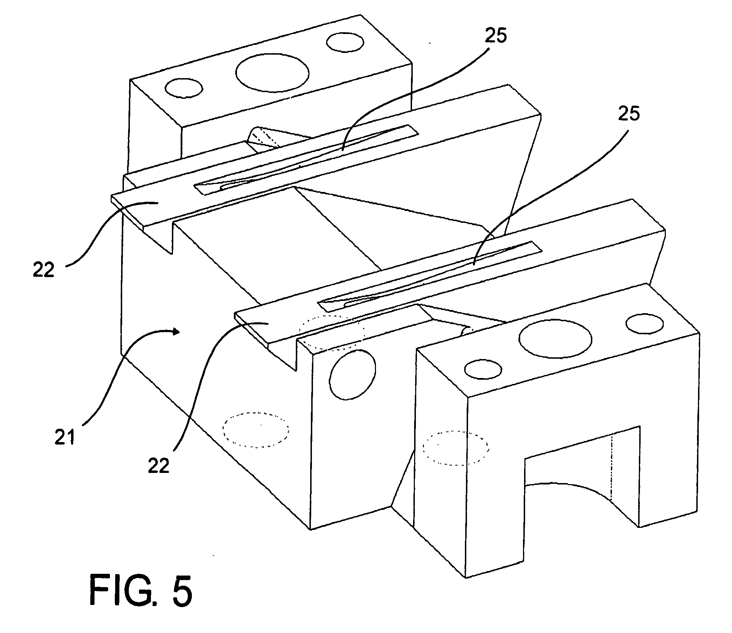

Le dispositif de l'invention 100 comporte donc, dans la zone B de la figure 2, un dispositif pneumatique spécifique 110, tel qu'illustré par les figures 3 à 7, qui forme les moyens de prépositionnement des produits 10a et 10b à des cadences élevées et sans les abîmer avant leur mise au pas. Ce dispositif pneumatique 110 se présente, dans la forme de réalisation représentée, sous la forme de deux canaux d'accélération 20 qui se composent, dans ce cas, de deux groupes d'éléments entièrement identiques qui opèrent respectivement sur les produits 10a de la piste de fabrication P1 et les produits 10b de la piste de fabrication P2. Chacun de ces groupes d'éléments comporte un support de base 21 pourvu de deux glissières parallèles 22, et surmonté de deux bordures latérales 23 servant d'appui à un bloc central 24. Les glissières parallèles 22, illustrées plus en détail par la figure 5, sont équipées d'entailles oblongues 25 qui communiquent avec des arrivées d'air (non représentées) en vue de générer des flux de gaz laminaires inférieurs pour créer des coussins d'air de sustentation des produits qui se déplacent à travers lesdits canaux d'accélération 20. De part et d'autre de ces glissières 22, les supports de base 21 sont munis de dégagements qui ont notamment pour fonction de permettre l'évacuation des éventuelles particules de matière qui auraient été acheminée depuis l'amont du dispositif.

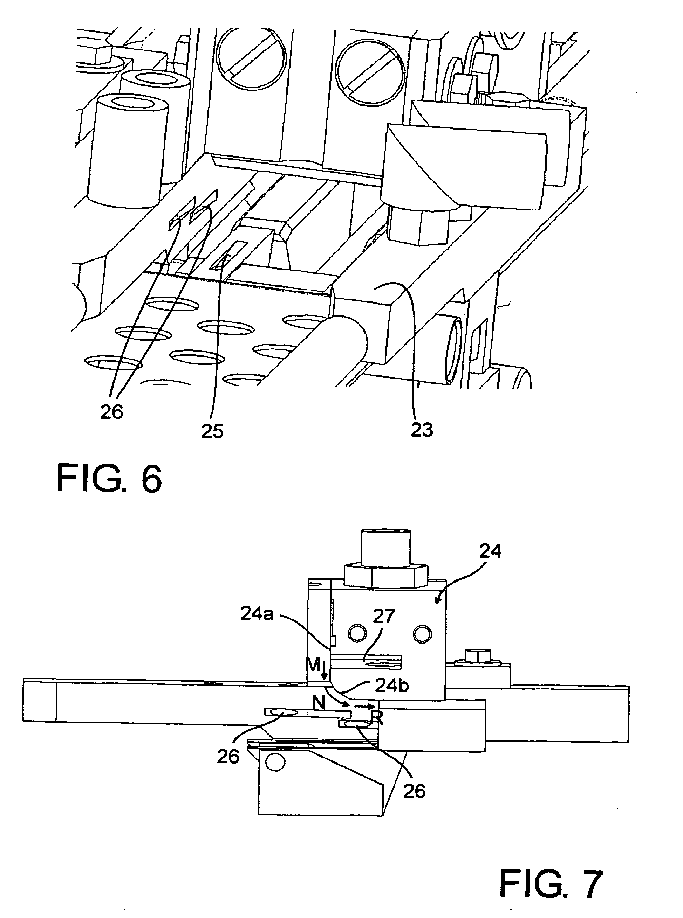

Les bordures latérales 23, disposées de part et d'autre des supports de base 21, sont de préférence chacune pourvus de deux entailles longitudinales 26, représentées plus en détail par les figures 6 et 7, qui sont superposées mais partiellement décalées et qui communiquent avec des arrivées d'air (non représentées) en vue de générer des flux de gaz laminaires latéraux pour guider les produits au cours de leur déplacement à travers les canaux d'accélération 20. Ces flux de gaz évitent que les produits frottent contre les bordures latérales 23 et que leurs faces latérales ne s'effritent.

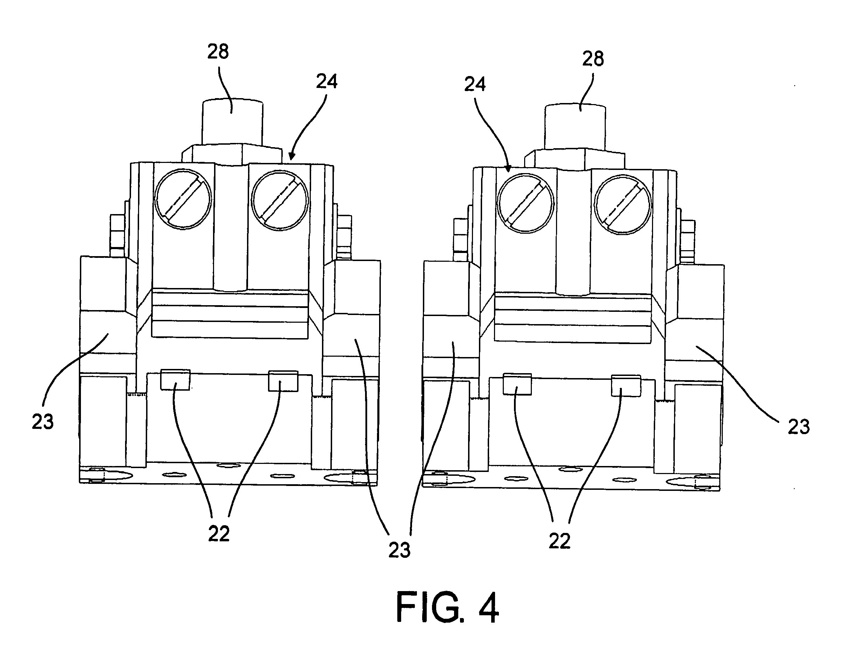

Le bloc central 24, représenté en coupe longitudinale par la figure 7, surplombe le support de base 21 et est solidaire des bordures latérales 23. Il comporte une cavité centrale 27 qui communique avec une arrivée d'air 28 (voir figures 3 et 4), ladite cavité 27 débouchant le long de l'une des faces dudit bloc central 24, en l'occurrence la face d'entrée 24a, pour générer un flux d'air laminaire supérieur représenté par les flèches M, N et R arrivant sur la face supérieure des produits afin de les accélérer. Ce flux d'air laminaire supérieur suit le flanc du bloc 24 qui comporte un angle cassé 24b. Cette géométrie particulière est à l'origine de l'effet Coanda qui accélère les produits qui sont par ailleurs sustentés et guidés au cours de leur passage dans les canaux d'accélération 20 de la zone de prépositionnement B.

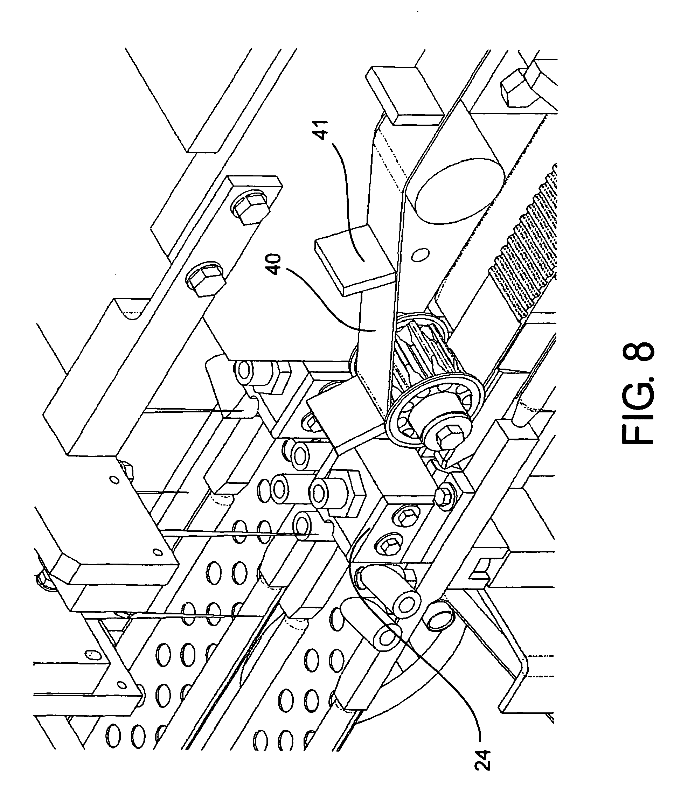

La figure 8 représente la mise au pas finale des produits sortant de la zone B du dispositif 100, au moyen d'un élément de support associé à un ruban à taquets 40 dont les taquets 41 prennent appui sur la face arrière des produits. Toutefois, on notera que la phase d'accélération a quasiment mis les produits dans leur position finale et que les taquets 41 n'ont plus qu'une fonction d'ajustage final. La mise en ligne des produits 10a et 10b sur une même bande de convoyage est ensuite faite par des poussoirs latéraux ou des bandes disposées obliquement qui recentrent les produits sur une même bande de transport vers une unité de conditionnement (non représentée).

La présente invention n'est pas limitée à la forme de réalisation décrite mais peut subir diverses modifications évidentes pour l'homme de l'art, celles-ci restant toutefois dans le domaine et l'étendue de l'invention.

## Revendications

1. Procédé pour alimenter une unité de conditionnement de produits alimentaires en portions individuelles, et en particulier de blocs de bouillons pressés réalisés avec un mélange inhomogène de composants agglomérés, dans lequel l'on sort les produits (10) d'une presse de mise en forme sur au moins une piste de fabrication (P), l'on transporte chaque produit en continu sur au moins une bande de convoyage et l'on procède à une mise au pas desdits produits pendant leur cheminement vers ladite unité de conditionnement, **caractérisé en ce qu'**il comporte, avant ladite mise au pas finale des produits, une phase de prépositionnement desdits produits dans laquelle on utilise pour le prépositionnement, en combinaison, un flux de gaz laminaire inférieur formant un coussin d'air pour sustenter les produits, au moins deux flux de gaz laminaires latéraux agissant sur les côtés de ces produits pour les guider, et un flux de gaz laminaire supérieur (M, N, R) à effet Coanda pour les accélérer.

2. Procédé selon la revendication 1, **caractérisé en ce que** l'on prépositionne chaque produit (10) en agissant sur le débit du flux de gaz laminaire supérieur en vue d'accélérer sélectivement lesdits produits.

3. Procédé selon la revendication 1, **caractérisé en ce que** l'on génère lesdits flux laminaires respectivement inférieur et latéraux selon un angle aigu par rapport à la direction de cheminement du produit (10).

4. Procédé selon la revendication 3, **caractérisé en ce que** ledit angle aigu est sensiblement compris entre 5° et 25°, et de préférence voisin de 15°.

5. Procédé selon la revendication 1, **caractérisé en ce que** l'on effectue la mise au pas finale des produits (10), après leur prépositionnement, en les transportant sur un élément de support associé à un ruban à taquets dont les taquets prennent appui sur la face arrière desdits produits.

6. Dispositif (100) pour alimenter une unité de conditionnement de produits alimentaires en portions individuelles (10a, 10b), et en particulier de blocs de bouillons pressés réalisés avec un mélange inhomogène de composants agglomérés, pour la mise en oeuvre du procédé selon les revendications précédentes, dans lequel l'on sort les produits d'une presse de mise en forme sur au moins une piste de fabrication (P), l'on transporte chaque produit en continu sur au moins une bande de convoyage et l'on procède à une mise au pas finale desdits produits pendant leur cheminement vers ladite unité de conditionnement, **caractérisé en ce que** ledit dispositif (100) comporte des moyens de prépositionnement sous la forme d'un dispositif pneumatique spécifique (110) agencé pour prépositionner les produits (10a, 10b) avant leur mise au pas, ledit dispositif pneumatique (110) étant agencé pour générer, en combinaison, un flux de gaz laminaire inférieur formant un coussin d'air pour sustenter lesdits produits (10a, 10b), au moins deux flux de gaz laminaires latéraux agissant sur les côtés de ces produits pour les guider, et un flux de gaz laminaire supérieur (M, N, R) à effet Coanda pour les accélérer.

7. Dispositif selon la revendication 6, **caractérisé en ce que** ledit dispositif pneumatique (110) comporte au moins un canal d'accélération (20) comportant un support de base (21) pourvu d'au moins une glissière (22) équipée d'au moins une entaille oblongue (25) qui communique avec une arrivée d'air en vue de générer le flux de gaz laminaire inférieur sustentant lesdits produits (10a, 10b) dans ledit canal d'accélération (20).

8. Dispositif selon la revendication 7, **caractérisé en ce que** ledit canal d'accélération (20) comporte deux bordures latérales (23) disposées de part et d'autre dudit support de base (21), lesdites bordures latérales étant pourvues chacune d'au moins une entaille longitudinale (26) qui communique avec une arrivée d'air en vue de générer les deux flux de gaz laminaires latéraux guidant lesdits produits (10a, 10b) dans ledit canal d'accélération (20).

9. Dispositif selon la revendication 7, **caractérisé en ce que** ledit canal d'accélération (20) comporte un bloc central (24) qui comprend une cavité centrale (27) communiquant avec une arrivée d'air (28), ladite cavité centrale (27) débouchant le long de la face d'entrée (24a) du bloc central (24) avec un angle cassé (24b) pour générer le flux d'air laminaire supérieur (M, N, R) à effet Coanda arrivant sur la face supérieure des produits et accélérant lesdits produits dans ledit canal d'accélération (20).

10. Dispositif selon les revendications 7 et 8, **caractérisé en ce que** les entailles (25) de la glissière (22) du support de base (21) du canal d'accélération (20) et les entailles (26) des bordures latérales (23) dudit canal forment des angles très aigus, de l'ordre de 5° à 25° et de préférence de l'ordre de 15° par rapport à la direction de cheminement des produits.

11. Dispositif selon la revendication 6, **caractérisé en ce que** les moyens agencés pour procéder à la mise au pas finale des produits (10a, 10b), après leur prépositionnement, comportent un élément de support associé à un ruban à taquets (40) dont les taquets (41) prennent appui sur la face arrière desdits produits.

## Claims

1. Process for feeding a packaging unit for food products with single portions, and in particular for pressed broth tablets made of a inhomogeneous mix of agglomerated components, in which the products (10) are extracted from a forming press on at least one fabrication track (P), each product is transported continuously on at least one conveyor belt and the pitch of said products is adjusted during their movement towards said packaging unit, **characterized in that** it includes, before said final pitch adjustment of the products, a pre-positioning phase of said products, in which one uses for the pre-positioning, in combination, a lower laminar gas flow forming an air cushion so as to lift said products, at least two lateral laminar gas flows acting on the sides of these products to guide them, and an upper laminar gas flow (M, N, R) with Coanda effect to accelerate them.

2. Process according to claim 1, **characterized in that** each product (10) is pre-positioned by acting upon the delivery of the upper laminar gas flow in order to accelerate selectively said products.

3. Process according to claim 1, **characterized in that** said respectively lower and lateral laminar flows are generated in an acute angle with respect to the direction of the movement of the product (10).

4. Process according to claim 3, **characterized in that** said acute angle is approximately between 5° and 25°, and preferably close to 15°.

5. Process according to claim 1, **characterized in that** the final adjusting of the pitch of the products (10) is carried out, after their pre-positioning, by transporting them on a supporting element associated with a belt with carriers, whose carriers rest on the rear side of said products.

6. Device (100) for feeding a packaging unit for food products with single portions (10a, 10b), and in particular for pressed broth tablets made of a inhomogeneous mix of agglomerated components, for the implementation of the process according to the previous claims, in which the products are extracted from a forming press on at least one fabrication track (P), each product is transported continuously on at least one conveyor belt and the final adjustment of the pitch of said products is carried out during their movement towards said packaging unit, **characterized in that** said device (100) includes pre-positioning means in the form of a specific pneumatic device (110) arranged to pre-position the products (10a, 10b) before their pitch is adjusted, said pneumatic device (110) being arranged to generate in combination a lower laminar gas flow forming an air cushion so as to lift said products (10a, 10b), at least two lateral laminar gas flows acting on the sides of these products to guide them, and an upper laminar gas flow (M, N, R) with Coanda effect to accelerate them.

7. Device according to claim 6, **characterized in that** said pneumatic device (110) includes at last one acceleration channel (20) including one base support (21) provided with at least one slide (22) equipped with at least one oblong notch (25) that communicates with an air supply in order to generate the lower laminar gas flow lifting said products (10a, 10b) in said acceleration channel (20).

8. Device according to claim 7, **characterized in that** said acceleration channel (20) includes two side edges (23) arranged on both sides of said base support (21), each of said side edges being provided with at least a longitudinal notch (26) that communicates with an air supply in order to generate the two lateral laminar gas flows that guide said products (10a, 10b) in said acceleration channel (20).

9. Device according to claim 7, **characterized in that** said acceleration channel (20) includes a central block (24) with a central cavity (27) that communicates with an air supply (28), said central cavity (27) ending along the inlet side (24a) of the central block (24) through a broken edge (24b) in order to generate the upper laminar air flow (M, N, R) with Coanda effect arriving on the upper side of the products and accelerating said products in said acceleration channel (20).

10. Device according to claims 7 and 8, **characterized in that** the notches (25) of the slide (22) of the base support (21) of the acceleration channel (20) and the notches (26) of the side edges (23) of said channel form very acute angles of the order of 5° to 25°, and preferably of the order of 15°, with respect to the direction of the movement of the products.

11. Device according to claim 6, **characterized in that** the means arranged for the final adjustment of the pitch of the products (10a, 10b) after their pre-positioning include a supporting element associated with a belt (40) with carriers, whose carriers (41) rest on the rear side of said products.

## Patentansprüche

1. Verfahren zur Speisung einer Verpackungseinheit für Lebensmittel mit Einzelportionen, und insbesondere für gepresste, aus einem inhomogenen Gemisch von zusammengepressten Bestandteilen hergestellte Brühewürfel, in dem man die Produkte (10) aus einer Formgebungs-Presse heraus auf mindestens eine Fertigungsbahn (P) legt, man jedes Produkt durchgehend auf mindestens einem Förderband transportiert und man während ihrer Bewegung in Richtung der besagten Verpackungseinheit den Schritt der besagten Produkte einstellt, **dadurch gekennzeichnet, dass** es vor dem besagten endgültigen Einstellen des Schritts der Produkte eine Vorpositionierungs-Phase der besagten Produkte beträgt, in der man für die Vorpositionierung eine Kombination von einem unteren laminaren Gasfluss, der ein Luftkissen bildet, um die besagten Produkte anzuheben, mindestens zwei seitlichen laminaren Gasflüssen, die auf die Seiten dieser Produkte einwirken um sie zu führen, und einem oberen laminaren Gasfluss (M, N, R) mit Coanda-Effekt, um sie zu beschleunigen, verwendet.

2. Verfahren nach Anspruch 1, **dadurch gekennzeichnet, dass** man jedes Produkt (10) durch Einstellung der Durchflussmenge des oberen laminaren Gasflusses vorpositioniert, um die besagten Produkte selektiv zu beschleunigen.

3. Verfahren nach Anspruch 1, **dadurch gekennzeichnet, dass** man die besagten unteren bzw. seitlichen laminaren Flüsse in einem spitzen Winkel in Bezug auf die Bewegungsrichtung des Produkts (10) erzeugt.

4. Verfahren nach Anspruch 3, **dadurch gekennzeichnet, dass** der besagte spitze Winkel merklich zwischen 5° und 25°, und vorzugsweise um ca. 15° liegt.

5. Verfahren nach Anspruch 1, **dadurch gekennzeichnet, dass** man den Schritt der Produkte (10) nach ihrer Vorpositionierung dadurch endgültig einstellt, dass man sie auf einem Trag-Element transportiert, das mit einem Band mit Mitnehmern zusammenarbeitet, dessen Mitnehmer an der Rückseite der besagten Produkte anliegen.

6. Vorrichtung (100) zur Speisung einer Verpackungseinheit für Lebensmittel mit Einzelportionen (10a, 10b), und insbesondere für gepresste, aus einem inhomogenen Gemisch von zusammengepressten Bestandteilen hergestellte Brühewürfel, für die Durchführung des Verfahrens nach den vorhergehenden Ansprüchen, in dem man die Produkte aus einer Formgebungs-Presse heraus auf mindestens eine Fertigungsbahn (P) legt, man jedes Produkt durchgehend auf mindestens einem Förderband transportiert und man während ihrer Bewegung in Richtung der besagten Verpackungseinheit den Schritt der besagten Produkte endgültig einstellt, **dadurch gekennzeichnet, dass** die besagte Vorrichtung (100) Vorpositionierungs-Mittel in der Form einer spezifische pneumatischen Vorrichtung (110) beträgt, die ausgelegt ist, um die Produkte (10a, 10b) vor der Einstellung ihres Schritts vor zu positionieren, wobei die besagte pneumatische Vorrichtung (110) ausgelegt ist, um eine Kombination von einem unteren laminaren Gasfluss, der ein Luftkissen bildet, um die besagten Produkte (10a, 10b) anzuheben, mindestens zwei seitlichen laminaren Gasflüssen, die auf die Seiten dieser Produkte einwirken um sie zu führen, und einem oberen laminaren Gasfluss (M, N, R) mit Coanda-Effekt, um sie zu beschleunigen, zu erzeugen.

7. Vorrichtung nach Anspruch 6, **dadurch gekennzeichnet, dass** die besagte pneumatische Vorrichtung (110) mindestens ein Beschleunigungs-Kanal (20) beträgt, der einen Basis-Träger (21) beträgt, der mit mindestens einer Gleitschiene (22) ausgerüstet ist, die mindestens einen mit einer Luftzufuhr verbundenen länglichen Einschnitt (25) aufweist, um den unteren laminaren Gasfluss zu erzeugen, der die besagten Produkte (10a, 10b) in dem besagten Beschleunigungs-Kanal (20) anhebt.

8. Vorrichtung nach Anspruch 7, **dadurch gekennzeichnet, dass** der besagte Beschleunigungs-Kanal (20) zwei auf beiden Seiten des besagten Basis-Trägers (21) angeordnete Seitenränder (23) beträgt, wobei die besagten Seitenränder jeweils mindestens einen mit einer Luftzufuhr verbundenen Längs-Einschnitt (26) aufweisen, um die beiden seitlichen laminaren Gasflüsse zu erzeugen, die die besagten Produkte (10a, 10b) in dem besagten Beschleunigungs-Kanal (20) führen.

9. Vorrichtung nach Anspruch 7, **dadurch gekennzeichnet, dass** der besagte Beschleunigungs-Kanal (20) einen zentralen Block (24) mit einer zentralen, mit einer Luftzufuhr (28) verbundenen Vertiefung (27) beträgt, wobei die besagte zentrale Vertiefung (27) über eine gebrochene Kante (24b) entlang der Eintritt-Seite (24a) des zentralen Blocks (24) mündet, um den oberen laminaren Luftfluss (M, N, R) mit Coanda-Effekt zu erzeugen, der auf die Oberseite der Produkte trifft und die besagten Produkte in dem besagten Beschleunigungs-Kanal (20) beschleunigt.

10. Vorrichtung nach Ansprüchen 7 und 8, **dadurch gekennzeichnet, dass** die Einschnitte (25) der Gleitschiene (22) des Basis-Trägers (21) des Beschleunigungs-Kanals (20) und die Einschnitte (26) der Seitenränder (23) des besagten Kanals in Bezug auf die Bewegungs-Richtung der Produkte sehr spitze Winkel in der Größenordnung von 5° bis 25°, und vorzugsweise in der Größenordnung von 15°, bilden.

11. Vorrichtung nach Anspruch 6, **dadurch gekennzeichnet, dass** die Mittel, die ausgelegt sind, um den Schritt der Produkte (10a, 10b) nach deren Vorpositionierung endgültig einzustellen, ein Trag-Element betragen, das mit einem Band (40) mit Mitnehmern zusammenarbeitet, dessen Mitnehmer (41) an der Rückseite der besagten Produkte anliegen.
